# EUROPÄISCHE PATENTSCHRIFT

(11) **EP 0 292 468 B1**
(45) Veröffentlichungstag und Bekanntmachung des Hinweises auf die Patenterteilung: **08.09.1993**
(21) Anmeldenummer: 88890105.5
(22) Anmeldetag: 02.05.1988
(51) Int. Cl.: B22F 5/08, F16D 69/02, F16D 69/00, B22F 5/00

(54) **Verfahren und Vorrichtung zum Herstellen eines Reib-bzw. Gleitkörpers**
Method and means of producing friction and bearing materials
Méthode et procédé de production de matériaux de friction et de glissement

(30) Priorität: 20.05.1987 AT 1282/87
(43) Veröffentlichungstag der Anmeldung: 23.11.1988
(73) Patentinhaber: HOERBIGER VENTILWERKE AKTIENGESELLSCHAFT, 1110 Wien (AT)
(72) Erfinder: Blankenhagen, Fred, D-8122 Penzberg (DE); Pütz, Hermann, D-8920 Schongau (DE)
(74) Vertreter: Klein, Adam, Dipl.Ing.

(56) Entgegenhaltungen:
- DE-B- 2 206 852
- DE-C- 3 417 813
- GB-A- 1 325 304

## Beschreibung

Die Erfindung bezieht sich auf ein Verfahren und auf eine Vorrichtung zum Herstellen eines Reib- bzw. Gleitkörpers für Kupplungen, Bremsen, Lager od.dgl., der aus einem Ringkörper aus Metall mit wenigstens einer unebenen, zur Ringachse im wesentlichen rotationssymmetrischen Reib- bzw. Gleitfläche besteht, auf die ein Streusinterbelag aufgebracht wird, wobei der Ringkörper zusammen mit einer an der Seite der Reib- bzw. Gleitfläche unter Einhaltung eines Ringspaltes im wesentlichen konzentrisch angeordneten Sinterform zumindest weitgehend eben aufgelegt, der Ringspalt mit Sinterpulver gefüllt, die Sinterung bei Sintertemperatur vorgenommen und der Streusinterbelag verdichtet wird.

Ein derartiges Verfahren ist beschrieben in DE-B- 2 206 852.

Streusinterbeläge werden seit längerer Zeit als Reibbeläge bei Kupplungen und Bremsen bzw. als Gleitbeläge in Lagern erfolgreich verwendet, weil sie je nach Materialzusammensetzung gute Reib- bzw. Gleiteigenschaften besitzen, haltbar und temperaturbeständig sind und verhältnismäßig einfach mit großer Genauigkeit gefertigt werden können. Bei der Herstellung der bekannten Beläge wird das Sinterpulver auf ein ebenes Trägerblech aufgestreut und anschließend bei der entsprechenden Temperatur aufgesintert, wobei durch ein- oder mehrmaliges Verdichten die erforderliche Materialdichte und die gewünschte kalibrierte Dicke des Belages hergestellt wird. Nach diesem Verfahren hergestellte Lamellen haben sich insbesondere in geschmierten Lamellenkupplungen und Bremsen verschiedener Art, z.B. auch in automatischen Schaltgetrieben von Kraftfahrzeugen und anderen Arbeitsmaschinen aller Art bewährt.

Aus der DE-PS 34 17 813 ist ein Reibkörper der eingangs genannten Art bekannt, der zur Verwendung in einer Reibkupplung oder Bremse, insbesondere in einer Synchronisiereinrichtung, mit einer unebenen, zur Achse des metallischen Ringkörpers rotationssymmetrischen Reibfläche versehen ist, welche im wesentlichen vom Mantel eines Kegelstumpfes gebildet ist. Diese Reibfläche ist auf einem separat gefertigten Trägerteil ausgebildet, der aus tiefziehfähigem Stahlblech oder ähnlichem Material besteht und vor seiner endgültigen Formgebung im ebenen Zustand mit dem Streusinterreibbelag versehen wird. Anschließend wird der als ebene Lamelle gefertigte Trägerteil zumindest näherungsweise in die gewünschte Form der Reibfläche gebracht und mittels Walzen, einschließlich Prägewalzen, reib- und zumindest in Teilflächen formschlüssig auf einen separaten Basiskörper aufgebracht und dort aufgelötet, aufgeschweißt, oder auf andere Weise haltbar befestigt. Dieser bekannte Reibkörper mit unebener, im wesentlichen rotationssymmetrischer Reibfläche ist also aus Einzelteilen zusammengesetzt, so daß nicht nur eine verhältnismäßig aufwendige und besondere Sorgfalt erfordernde Herstellung sondern auch unvermeidbar erhöhte Herstellungstoleranzen durch die Summierung der Toleranzen der Einzelbauteile gegeben sind.

Ein weiterer Reibkörper der eingangs genannten Art ist beispielsweise aus der GB-PS 1 325 304 bekannt. Dort ist ein im wesentlichen zylindrisch geformtes, an einer Umfangsstelle offenes Bremsband mit einem Bremsbelag versehen, der aus einem flexiblen Stahlband als Träger mit einem darauf aufgebrachten Streusinterreibbelag besteht und auf dem Bremsband durch Punktschweißung befestigt ist. Bei dieser bekannten Anordnung ist ebenfalls ein separat gefertigter Reibkörper gegeben, was eine weitgehend mit der oben beschriebenen bekannten Anordnung übereinstimmende Ausbildung mit im wesentlichen den gleichen Nachteilen ergibt.

Aufgabe der Erfindung ist es, das Verfahren der eingangs genannten Art und die Vorrichtung zum Herstellen von Reib- bzw. Gleitkörpern so zu verbessern, daß die genannten Nachteile nicht auftreten und daß insbesondere Reib- bzw. Gleitkörper mit beliebiger Formgebung und mit nicht ebenen Streusinterbelägen einfach hergestellt werden können, ohne daß durch auf die Reih- bzw. Gleitflächen der Ringkörper aufgebrachte separate, mit dem Streusinterbelag versehene Zusatzteile größere Herstellungstoleranzen in Kauf genommen werden müssen.

Erfindungsgemäß wird die genannte Aufgabe unter Weiterbildung des eingangs angeführten Verfahrens dadurch gelöst, daß zur Verdichtung des in den Ringspalt gefüllten Sinterpulvers bei Sintertemperatur eine Sinterform aus einem Material verwendet wird, welches einen von Ringkörper unterschiedlichen Wärmeausdehnungskoeffizienten aufweist, der bei innenliegender Sinterform größer und bei außenliegender Sinterform kleiner als der des Ringkörpers ist. Diese Weiterbildung macht Gebrauch vom Umstand, daß beim angewendeten Herstellungsverfahren das eingefügte Sinterpulver auf der einen Seite von der Reib- bzw. Gleitfläche des metallischen Ringkörpers und auf der anderen Seite von der im wesentlichen dazu konzentrischen Sinterform bis auf die stirnseitige Spaltöffnung zum Einfüllen des Sinterpulvers selbst praktisch eingeschlossen ist. Bei Erwärmung auf Sintertemperatur dehnen sich die beiden das eingefüllte Sinterpulver einschließenden Bauteile entsprechend ihres Wärmeausdehnungskoeffizienten unterschiedlich aus, was ohne jeden zusätzlichen Verfahrensschritt die zur Verdichtung während der Sinterung gewünschte Druckbeaufschlagung ergibt. Wenn der Ringkörper an seiner Innenseite besintert werden soll, wird eine Sinterform mit gegenüber dem Werkstoff des Ringkörpers größerem Wärmeausdehnungskoeffizienten verwendet; bei Besinterung des Ringkörpers an seinem Außenumfang wird eine Sinterform mit gegenüber dem Material des Ringkörpers kleinerem Wärmeausdehnungskoeffizienten vorgesehen. Durch diese Verfahren wird der gesamte Herstellungsvorgang vereinfacht, da der Reib-bzw. Gleitkörper nach Aufsinterung des Belages unmittelbar fertig ist.

Gemäß einer weiteren Ausgestaltung der Erfindung können zur Variation der Druckbeaufschlagung bei Sintertemperatur Sinterformen aus Materialien mit unterschiedlichem Wärmeausdehnungskoeffizienten verwendet werden, deren Austausch und gegenseitige Abstimmung aufeinander vielfältigste Einflußmöglichkeiten bzw. Möglichkeiten zur Berücksichtigung verschiedenster Sintermaterialien u.dgl. ergibt.

In weiterer Ausgestaltung des erfindungsgemäßen Herstellungsverfahrens werden bei Ringkörpen aus Stahl, Sinterstahl oder Messing innenliegende Sinterformen aus X 12 CrNi 188-Stahl und/oder außenliegende Sinterformen aus X 20 Cr 13-Stahl oder Keramik verwendet. Diese Materialkombinationen haben sich im Zusammenhang mit den für Reib- bzw. Gleitbeläge verwendeten Sinterpulvern als bestens geeignet erwiesen, die günstigste Druckbeaufschlagung bei Sintertemperatur sicherzustellen.

Eine Vorrichtung zur Herstellung eines Reib- bzw. Gleitkörpers für Kupplungen, Bremsen, Lager od.dgl., der aus einem Ringkörper aus Metall mit wenigstens einer unebenen, zur Ringachse im wesentlichen rotationssymmetrischen Reib- bzw. Gleitfläche aus einem Streusinterbelag besteht, weist eine Sinterform auf, welche der Reib- bzw. Gleitfläche des Ringkörpers unter Einhaltung eines Ringspaltes angepaßt und gegenüber dem Ringkörper zentrierbar ist.

Erfindungsgemäß besteht die Sinterform aus einem Material, welches einen vom Ringkörpers unterschiedlichen Wärmeausdehnungskoeffizienten aufweist, der bei innenliegender Sinterform größer und bei außenliegender Sinterform kleiner als der des Ringkörpers ist. Damit wird auf die bereits oben zum erfindungsgemäßen Herstellungsverfahren beschriebene einfache Weise erreicht, daß bei gemeinsamer Erwärmung des Ringkörpers, der Sinterform und des im dazwischen freibleibenden Ringspalt eingestreuten Sinterpulvers auf Sintertemperatur eine Verdichtung bzw. Vorverdichtung des Sinterpulvers bzw. des entstehenden Streusinterbelages auftritt.

Nach einer bevorzugten Ausgestaltung der erfindungsgemäßen Vorrichtung besteht die Sinterform aus zwei Teilen, von denen der erste als Zentrierteil, einerseits für den Ringkörper und anderseits für den zweiten, mit der Reib- bzw. Gleitfläche am Ringkörper den mit Sinterpulver zu befüllenden Ringspalt bildenden Formteil, ausgeführt ist. Damit sind die beiden unmittelbar den zu befüllenden Ringspalt begrenzenden Teile gemeinsam an einem Zentrierteil zentriert, was auf einfache Weise eine genaue Aufbringung des Streusinterbelages ermöglicht.

Eine weitere Verbesserung der erfindungsgemäßen Vorrichtung besteht darin, daß die Sinterform aus einem mit dem verwendeten Sinterpulver bei Sintertemperatur keine Verbindung eingehenden Material besteht.

Nach einer anderen vorteilhaften Weiterbildung der erfindungsgemäßen Vorrichtung ist vorgesehen, daß bei einem Ringkörper aus Stahl, Sinterstahl oder Messing die innenliegende Sinterform aus X 12 CrNi 188-Stahl und/oder die außenliegende Sinterform aus X 20 Cr 13-Stahl oder Keramik besteht. Diese Materialkombinationen haben sich - wie ebenfalls oben zum erfindungsgemäßen Herstellungsverfahren bereits angesprochen - bestens bewährt, um mit den für Reib- bzw. Gleitbeläge gängigen Streusinterpulvern bzw. den bei deren Sinterung günstig anzuwendenden Drucken Beläge von bester Qualität zu ergeben.

Nach einer weiteren Ausgestaltung der erfindungsgemäßen Vorrichtung kann der mit dem Ringkörper den Ringspalt bildende Bereich der Sinterform einen Querschnitt bzw. ein Widerstandsmoment von solcher Größe aufweisen, daß sich in Zusammenwirkung mit dem Querschnitt bzw. Widerstandsmoment des Ringkörpers und dem Unterschied der beiden Temperaturausdehnungskoeffizienten der gewünschte Verdichtungsdruck bei Sintertemperatur ergibt. Damit ist eine weitere Beeinflussung des bei Sintertemperatur auf das Sinterpulver bzw. auf den Streusinterbelag ausgeübten Druckes über die konstruktive Gestaltung der Sinterform bzw. des Ringkörpers möglich.

Schließlich kann bei der erfindungsgemäßen Vorrichtung nach einer anderen bevorzugten Ausgestaltung auch der dem Ringspalt zugewandte Bereich der Sinterform mit Profilen für Ölnuten bzw. Öldrainagenuten im Streusinter-Belag versehen sein, was die Anbringung derartiger Nuten ohne jede Nachbearbeitung des Belages ermöglicht.

Die Erfindung wird nachfolgend anhand der Zeichnungen näher beschrieben. Es zeigen:
Fig. 1 einen schematischen Querschnitt durch einen erfindungsgemäß hergestellten Reibkörper,
Fig. 2 einen Teil der Draufsicht auf den Reibkörper nach Fig. 1,
Fig. 3 einen teilweisen Querschnitt durch eine erfindungsgemäße Vorrichtung während des Herstellungsverfahrens des Reibkörpers nach den Fig. 1 und 2 in vergrößertem Maßstab,
Fig. 4 einen Ausschnitt aus der Draufsicht auf ein anderes Ausführungsbeispiel einer erfindungsgemäßen Vorrichtung zur Herstellung eines Reib- bzw. Gleitkörpers,
die Fig. 5 und 6 einen doppelseitig besinterten Reibkörper nach der Erfindung in jeweils den Fig. 1 und 2 entsprechender Darstellung, und
Fig. 7 in einer der Fig. 3 entsprechenden Darstellung eine Vorrichtung zur Herstellung des Reibkörpers nach den Fig. 5 und 6.

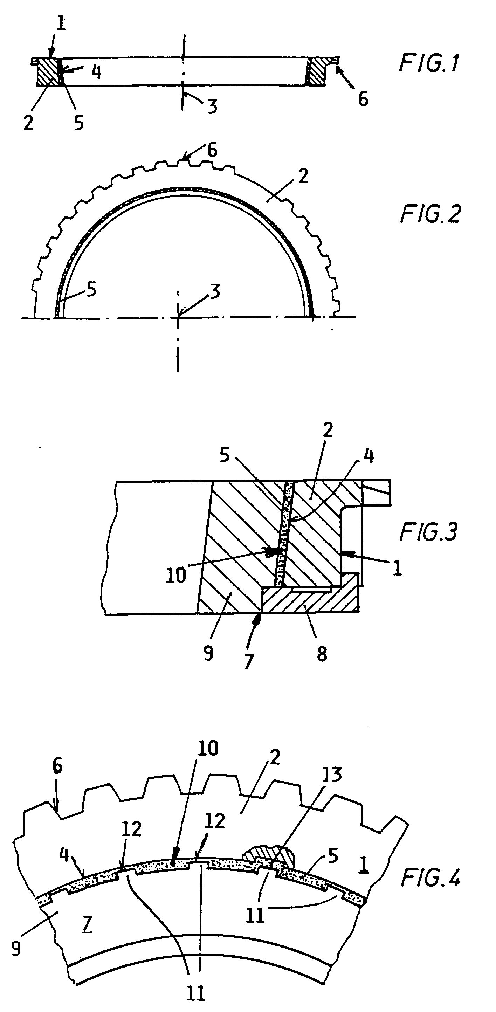

Der Reibkörper 1 nach den Fig. 1 und 2 besteht aus einem Ringkörper 2, mit einer zur Ringachse 3 rotationssymmetrischen Reibfläche 4, die als Mantel eines Kegelstumpfes ausgebildet ist und einen Streusinterbelag 5 aufweist. Der Ringkörper 2 besteht aus Metall, beispielsweise aus Stahl, Sinterstahl oder Messing; der auf der Reibfläche 4 des Ringkörpers 2 selbst unmittelbar aufgesinterte Belag 5 wird aus geeignetem Streusinterpulver durch das untenstehend anhand der Fig. 3 beschriebene Verfahren aufgebracht.

Am äußeren Umfangsrand des Reibkörpers 1 bzw. des Ringkörpers 2 ist eine Zahnung 6 zu ersehen, die zur Festlegung des Reibringes gegenüber hier nicht dargestellten Bauteilen einer Kupplung, einer Bremse oder eines Schaltgetriebes dient.

Der große Vorteil des dargestellten Reibkörpers 1 ist seine einfache und genaue Herstellbarkeit, die nun unter Hinweis auf Fig. 3 beschrieben wird. Der Streusinterbelag 5 wird - wie oben bereits erwähnt - unmittelbar auf die kegelige und damit unebene Reibfläche 4 des Ringkörpers 2 selbst aufgesintert, wozu der Ringkörper 2 zusammen mit einer an der Seite der Reibfläche 4 unter Einhaltung eines Ringspaltes 10 (der in Fig. 3 bereits mit dem Streusinterpulver bzw. dem fertigen Streusinterbelag 5 gefüllt dargestellt ist) konzentrisch angeordneten Sinterform 7 vorerst zumindest weitgehend eben aufgelegt wird. Die Sinterform besteht aus zwei Teilen 8,9 von denen der erste 8 als Zentrierteil, einerseits für den Ringkörper 2 und anderseits für den zweiten 9, mit der Reibfläche 4 am Ringkörper 2 den mit Sinterpulver zu befüllenden Ringspalt bildenden Formteil, ausgeführt ist. Auf diese Weise ist insbesondere die Weite des Ringspaltes 10 genau festgelegt. Der Ringspalt 10 wird anschließend mit Sinterpulver gefüllt, wobei erforderlichenfalls insbesondere bei engen Spalten, beispielsweise durch entsprechende Auswahl eines speziellen Kornbandes des Belagpulvers, ein sicheres Einfüllen und eine leichte Vorverdichtung erreicht werden kann. Anschließend wird die gesamte in Fig. 3 dargestellte Einheit z.B. in einem hier nicht dargestellten Ofen auf Sintertemperatur erwärmt, wobei das im Ringspalt 10 befindliche Sinterpulver zum Belag 5 zusammensintert.

Zur Unterstützung des Sinter- und Bindungsvorganges wird über die Sinterform 7 bei Sintertemperatur ein Druck auf das Sinterpulver im Ringspalt 10 ausgeübt, der dadurch bereitgestellt wird, daß das Material der Sinterform 7 einen Temperaturausdehnungskoeffizienten aufweist, der größer ist als der des Ringkörpers 2 - so können für die dargestellte Ausbildung die beiden Teile 8,9 der Sinterform 7 beispielsweise aus X 12 CrNi 188-Stahl bestehen.

Nach Entfernen der Sinterform 7 kann - falls erforderlich - durch nachfolgendes Kaltpressen od.dgl. eine Profilierung oder Kalibrierung des Streusinterbelages 5 vorgenommen werden.

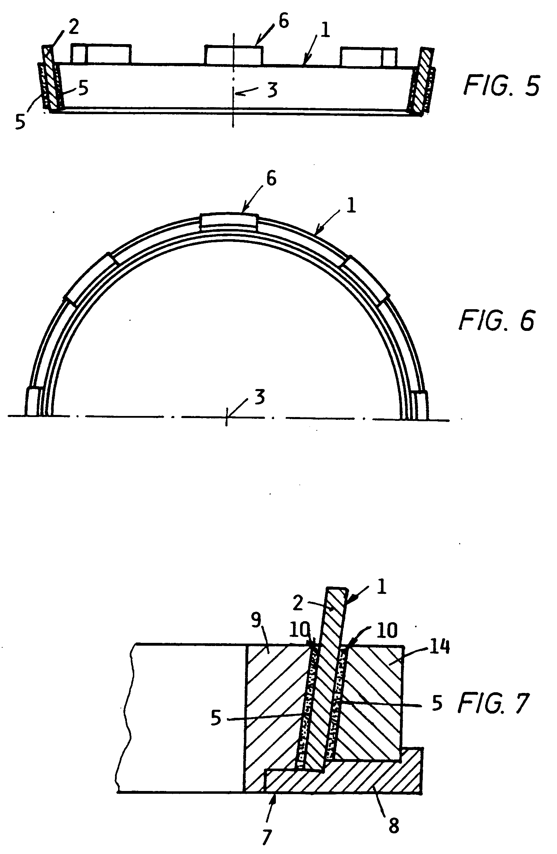

Bei dem in Fig. 4 dargestellten Ausführungsbeispiel einer Vorrichtung zur Herstellung eines mit einem Streusinterbelag versehenen Reibkörpers 1 ist der dem Ringspalt 10 zugewandte Außenbereich der Sinterform 7 - von der hier nur der zweite bzw. Formteil 9 zu sehen ist - mit im Querschnitt rechteckigen oder ähnlichen Profilen 11 für Ölnuten 12 im Streusinterbelag 5 versehen. Weiters sind auch nutenförmige Vertiefungen 13 in die Reibfläche 4 am Ringkörper 2 eingearbeitet, die das Haften des aufgesinterten Belages 5 am Ringkörper 2 auf formschlüssig unterstützen. Eine derartige Unterstützung könnte davon abgesehen aber auch z.B. einfach durch entsprechendes Aufrauhen bzw. rauhes Herstellen der Reibfläche 4 erfolgen.

Der aus den Fig. 5 bis 7 ersichtliche Reibkörper 1 ist auf der Innen- und Außenseite mit einem Streusinterbelag 5 versehen, wobei hier der Ringkörper 2 als Teil eines Kegelmantels ausgeführt ist und beispielswiese auch von einem Blechpreßteil od.dgl. gebildet sein kann. Die Zahnung 6 ist hier in Form von einzelnen, auf dem Umfang des Ringkörpers 2 verteilten Mitnehmern ausgeführt.

Die Sinterform 7 besteht gemäß Fig. 7 im wesentlichen aus drei Teilen, der erste Teil 8 dient, wie in Fig. 3, zum Aufsetzen und Zentrieren des Ringkörpers 2 sowie auch der beiden weiteren Teile 9 und 14 der Sinterform 7. Es ist nun hier zu beiden Seiten des Ringkörpers 2 jeweils ein separater Ringspalt 10 (der auch in Fig. 7 bereits mit dem Streusinterpulver bzw. dem fertigen Streusinterbelag 5 gefüllt dargestellt ist) vorgesehen. Der innenliegende Teil 9 der Sinterform 7 besteht aus einem Material, welches einen größeren Temperaturausdehnungskoeffizienten aufweist als der des Ringkörpers 2; der außenliegende Teil 14 der Sinterform 7 besteht seinerseits aus einem Material, welches einen kleineren Temperaturausdehnungskoeffizienten aufweist als der Ringkörper 2 - damit ergibt sich bei der Erwärmung der gesamten in Fig. 7 dargestellten Einheit, z.B. in einem hier nicht dargestellten Ofen, auf Sintertemperatur ein Druck auf das Sinterpulver in den Ringspalten 10, der eine Verdichtung des Streusinterbelages sowie eine Verbindung desselben mit dem Ringkörper bewirkt und verbessert.

## Patentansprüche

1. Verfahren zum Herstellen eines Reib- bzw. Gleitkörpers für Kupplungen, Bremsen, Lager u.dgl., der aus einem Ringkörper aus Metall mit wenigstens einer unebenen, zur Ringachse im wesentlichen rotationssymmetrischen Reib- bzw. Gleitfläche besteht, auf die ein Streusinterbelag aufgebracht wird, wobei der Ringkörper zusammen mit einer an der Seite der Reib- bzw. Gleitfläche unter Einhaltung eines Ringspaltes im wesentlichen konzentrisch angeordneten Sinterform zumindest weitgehend eben aufgelegt, der Ringspalt mit Sinterpulver gefüllt, die Sinterung bei Sintertemperatur vorgenommen und der Streusinterbelag verdichtet wird, dadurch gekennzeichnet, daß zur Verdichtung des in den Ringspalt (10) gefüllten Sinterpulvers bei Sintertemperatur eine Sinterform (7) aus einem Material verwendet wird, welches einen vom Ringkörper (2) unterschiedlichen Wärmeausdehnungskoeffizienten aufweist, der bei innenliegender Sinterform (7) größer und bei außenliegender Sinterform kleiner als der des Ringkörpers (2) ist.

2. Verfahren nach Anspruch 1, dadurch gekennzeichnet, daß zur Variation der Druckbeaufschlagung bei Sintertemperatur Sinterformen (7) aus Materialien mit unterschiedlichen Wärmeausdehnungskoeffizienten verwendet werden.

3. Verfahren nach einem der Ansprüche 1 oder 2, dadurch gekennzeichnet, daß bei Ringkörpern (2) aus Stahl, Sinterstahl oder Messing innenliegende Sinterformen (7) aus X 12 CrNi 188-Stahl und/oder außenliegende Sinterformen aus X 20 Cr 13-Stahl oder Keramik verwendet werden.

4. Vorrichtung zur Herstellung eines Reib- bzw. Gleitkörpers für Kupplungen, Bremsen, Lager od.dgl., der aus einem Ringkörper aus Metall mit wenigstens einer unebenen, zur Ringachse im wesentlichen rotationssymmetrischen Reib- bzw. Gleitfläche aus einem Streusinterbelag besteht, wobei eine Sinterform vorgesehen ist, welche der Reib- bzw. Gleitfläche des Ringkörpers unter Einhaltung eines Ringspaltes angepaßt und gegenüber dem Ringkörper zentrierbar ist, dadurch gekennzeichnet, daß die Sinterform (7) aus einem Material besteht, welches einen vom Ringkörper (2) unterschiedlichen Wärmeausdehnungskoeffizienten aufweist, der bei innenliegender Sinterform (7) größer und bei außenliegender Sinterform kleiner als der des Ringkörpers (2) ist.

5. Vorrichtung nach Anspruch 4, dadurch gekennzeichnet, daß die Sinterform (7) aus zwei Teilen (8,9) besteht, von denen der erste (8) als Zentrierteil einerseits für den Ringkörper (2) und anderseits für den zweiten (9), mit der Reib- bzw. Gleitfläche (4) am Ringkörper (2) den mit Sinterpulver zu befüllenden Ringspalt (10) bildenden Formteil ausgeführt ist.

6. Vorrichtung nach einem der Ansprüche 4 oder 5, dadurch gekennzeichnet, daß die Sinterform (7) aus einem mit dem verwendeten Sinterpulver bei Sintertemperatur keine Verbindung eingehenden Material besteht.

7. Vorrichtung nach Anspruch 6, dadurch gekennzeichnet, daß bei einem Ringkörper (2) aus Stahl, Sinterstahl oder Messing die innenliegende Sinterform (7) aus X 12 CrNi 188-Stahl und/oder die außenliegende Sinterform aus X 20 Cr 13-Stahl oder Keramik besteht.

8. Vorrichtung nach Anspruch 6 oder 7, dadurch gekennzeichnet, daß der mit dem Ringkörper (2) den Ringspalt (10) bildende Bereich der Sinterform (7) einen Querschnitt bzw. ein Widerstandsmoment von solcher Größe aufweist, daß sich in Zusammenwirkung mit dem Querschnitt bzw. Widerstandsmoment des Ringkörpers (2) und dem Unterschied der beiden Temperaturausdehnungskoeffizienten der gewünschte Verdichtungsdruck bei Sintertemperatur ergibt.

9. Vorrichtung nach einem der Ansprüche 4 bis 8, dadurch gekennzeichnet, daß der dem Ringspalt (10) zugewandte Bereich der Sinterform (7) mit Profilen (11) für Ölnuten (12) bzw. Öldrainagenuten im Streusinterbelag (5) versehen ist.

## Claims

1. A process for manufacturing a friction or sliding body for clutches, brakes, bearings and the like, comprising a metal annular body with at least one uneven friction and/or sliding surface substantially rotationally symmetrical about the annulus axis, to which surface a scatter-sintering coating is applied, the annular body, together with a sintering mould essentially concentrically arranged on the side of the friction and/or sliding surface whilst maintaining an annular gap, being at least substantially evenly coated, the annular gap being filled with sintering powder, sintering being undertaken at sintering temperature and the scatter-sintering coating being compacted, **characterised in that** to compact the sintering powder filling the annular gap (10) at sintering temperature, a sintering mould (7) is used consisting of a material having a different co-efficient of thermal expansion to that of the annular body (2), the co-efficient of the interior sintering mould (7) being greater than, and that of the exterior sintering mould being smaller than, that of the annular body (2).

2. A process in accordance with claim 1, **characterised in that** to vary the action of pressure at sintering temperature, sintering moulds (7) are used consisting of materials with different co-efficients of thermal expansion.

3. A process in accordance with one of claims 1 or 2, **characterised in that** with annular bodies (2) made of steel, sintering steel or brass, interior sintering moulds (7) consisting of X 12 CrNi 188-steel and/or exterior sintering moulds consisting of X 20 Cr 13-steel or ceramics are used.

4. A device for manufacturing a friction and/or sliding body for clutches, brakes, bearings and the like, comprising a metal annular body with at least one uneven friction and/or sliding surface comprising a scatter-sintering coating and substantially rotationally symmetrical about the annulus axis, a sintering mould being provided which is fitted to the friction and/or sliding surface of the annular body whilst maintaining an annular gap, and is centrable with respect to the annular body, **characterised in that** the sintering mould (7) consists of a material having a different co-efficient of thermal expansion to that of the annular body (2), the co-efficient of the interior sintering mould (7) being greater than, and that of the exterior sintering mould being smaller than, that of the annular body (2).

5. A device in accordance with claim 4, **characterised in that** the sintering mould (7) comprises two parts (8, 9) the first (8) thereof being constructed as a centring component for, on the one hand, the annular body (2) and, on the other hand, the second mould part (9) which, together with the friction or sliding surface (4) on the annular body (2), forms the annular gap (10) to be filled with sintering powder.

6. A device in accordance with one of claims 4 or 5, **characterised in that** the sintering mould (7) consists of a material which does not form any compound at sintering temperature with the sintering powder used.

7. A device in accordance with claim 6, **characterised in that** with an annular body (2) made of steel, sintering steel or brass, the interior sintering mould (7) consists of X 12 CrNi 188-steel and/or the exterior sintering mould consists of X 20 Cr 13-steel or ceramics.

8. A device in accordance with claim 6 or 7, **characterised in that** the region of the sintering mould (7) forming the annular gap (10) with the annular body (2) is of a cross-section and/or a moment of resistance of such a size that, in co-operation with the cross-section and/or moment of resistance of the annular body (2), and with the difference between the two co-efficients of thermal expansion, the required compacting pressure results at sintering temperature.

9. A device in accordance with one of claims 4 to 8, **characterised in that** the region of the sintering mould (7) facing the annular gap (10) is provided with profiles (11) for oilways (12) and/or oil drainage grooves in the scatter-sintering coating (5).

## Revendications

1. Procédé pour fabriquer une pièce de friction ou de glissement (pièce antifriction) pour embrayages, freins, paliers et analogues, qui est constituée d'une pièce métallique en forme d'anneau, présentant au moins une surface de friction ou de glissement non plane, essentiellement à symétrie de révolution par rapport à l'axe de l'anneau, sur laquelle est appliquée une garniture frittée saupoudrée, procédé selon lequel on place la pièce annulaire au moins à peu près à niveau sur un support quelconque, ensemble avec un moule de frittage disposé essentiellement concentriquement contre un côté de la surface de friction ou de glissement, avec maintien d'une fente annulaire, on remplit la fente annulaire avec de la poudre à fritter, on effectue le frittage à la température de frittage et on rend la garniture frittée saupoudrée plus compacte, caractérisé en ce que, pour compacter, à la température de frittage, la poudre à fritter introduite dans la fente annulaire (10), on utilise un moule de frittage (7) d'un matériau ayant un coefficient de dilatation thermique autre que la pièce annulaire (2), qui est plus grand que celui de la pièce annulaire (2) si le moule de frittage (7) est situé à l'intérieur et plus petit que celui de la pièce annulaire (2) si le moule de frittage est situé à l'extérieur.

2. Procédé selon la revendication 1, caractérisé en ce que, pour varier la sollicitation par la pression exercée à la température de frittage, on utilise des moules de frittage (7) de matériaux ayant des coefficients de dilation thermique différents.

3. Procédé selon la revendication 1 ou 2, caractérisé en ce que, pour des pièces annulaires (2) en acier, acier fritté ou laiton, on emploie des moules de frittage (7) intérieurs en acier X 12 CrNi 188 et/ou des moules de frittage extérieurs en acier X 20 Cr 13 ou en céramique.

4. Dispositif pour fabriquer une pièce de friction ou de glissement (pièce antifriction) pour embrayages, freins, paliers et analogues, qui est constituée d'une pièce métallique en forme d'anneau, présentant au moins une surface de friction ou de glissement non plane, essentiellement à symétrie de révolution par rapport à l'axe de l'anneau, sur laquelle est appliquée une garniture de friction saupoudrée, avec prévision d'un moule de frittage adapté à la surface de friction ou de glissement de la pièce annulaire, avec maintien d'une fente annulaire, et pouvant être centré par rapport à la pièce annulaire, caractérisé en ce que le moule de frittage (7) est fait d'un matériau ayant un coefficient de dilatation thermique autre que la pièce annulaire (2), qui est plus grand que celui de la pièce annulaire (2) si le moule de frittage (7) est situé à l'intérieur et plus petit que celui de la pièce annulaire (2) si le moule de frittage est situé à l'extérieur.

5. Dispositif selon la revendication 4, caractérisé en ce que le moule de frittage (7) est composé de deux parties (8, 9) dont la première (8) est réalisée comme une partie de centrage, d'une part pour la pièce annulaire (2) et d'autre part pour la seconde partie ou partie de moulage (9), laquelle définit la fente annulaire (10) à remplir de poudre à fritter avec la surface de friction ou de glissement (4) de la pièce (2).

6. Dispositif selon la revendication 4 ou 5, caractérisé en ce que le moule de frittage (7) est réalisé d'un matériau n'établissant pas de liaison, à la température de frittage, avec la poudre à fritter utilisée.

7. Dispositif selon la revendication 6, caractérisé en ce que, si la pièce annulaire (2) est en acier, acier fritté ou laiton, le moule de frittage (7) intérieur est en acier X 12 CrNi 188 et/ou le moule de frittage extérieur est en acier X 20 Cr 13 ou en céramique.

8. Dispositif selon la revendication 6 ou 7, caractérisé en ce que la portion du moule de frittage (7) définissant avec la pièce annulaire (2) la fente annulaire (10), possède une section droite ou un moment résistant d'une grandeur telle qu'en coopération avec la section droite ou le moment résistant de la pièce annulaire (2) et la différence des deux coefficients de dilatation thermique, la pression de compactage désirée est créée à la température de frittage.

9. Dispositif selon une des revendications 4 à 8, caractérisé en ce que la zone du moule de frittage (7) dirigée vers la fente annulaire (10) est pourvue de profils (11) pour la formation de rainures de graissage (12) ou de rainures de drainage d'huile dans la garniture frittée saupoudrée (5).
